# EUROPEAN PATENT APPLICATION

(11) **EP 4 503 782 A1**
(43) Date of publication of application: **05.02.2025**
(21) Application number: 22934213.4
(22) Date of filing: 31.03.2022
(51) Int. Cl.: H04W 64/00

(54) **SIGNAL PROCESSING METHODS AND APPARATUSES, AND DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/084483
(87) International publication number: WO 2023/184373

(57) **Abstract**

The present disclosure belongs to the technical field of communications. Provided are signal processing methods and apparatuses, and a device and a storage medium. A method comprises: acquiring carrier frequency information of at least two carrier frequencies configured by a network device, wherein the carrier frequencies are used for the transmission of a positioning signal; acquiring positioning signal resources corresponding to the carrier frequencies configured by the network device; and sending the positioning signal on the basis of the carrier frequency information of the at least two carrier frequencies and the positioning signal resources. In the present disclosure, a method for configuring a positioning signal based on multiple carrier frequencies and a method for reporting a measurement report are provided with regard to a multi-carrier-frequency scenario, thereby solving the technical problems of "how to configure a positioning signal based on multiple carrier frequencies and how to report a measurement report".

## Description

### TECHNICAL FIELD

The present disclosure relates to the field of communication technologies, in particular to a method and an apparatus for signal processing, a device and a storage medium.

### BACKGROUND

In a new radio (NR) system, in order to improve the positioning accuracy, a carrier phase-based positioning method is usually used for positioning of a device.

In related art, in the event of positioning using the carrier phase-based positioning method, it is usually necessary to measure and report an integer number of complete phase cycles of a positioning signal (e.g., an integer part of a quotient between a transmission distance and a carrier frequency wavelength) and a fractional part of phase less than a complete cycle (e.g., a fractional part of the quotient between the transmission distance and the carrier frequency wavelength). In related art, there will be an ambiguity problem in the integer number of the phase cycles of the positioning signal. In order to solve the integer ambiguity problem of the phase cycles, the positioning signal is usually sent separately by using a plurality of carrier frequencies having different wavelengths but experiencing the same transmission distance to solve the integer ambiguity problem of the phase cycles.

In addition, after the plurality of carrier frequencies are introduced into the NR system in the related art, the problem of how to configure the multi-carrier-frequency positioning signal and how to report a measurement report needs to be solved urgently.

### SUMMARY

The present disclosure provides a method and an apparatus for signal processing, a device and a storage medium, in order to solve the technical problem of how to configure the multi-carrier-frequency positioning signal and how to report a measurement report.

Embodiments in an aspect of the present disclosure provide a method for signal processing, which is performed by a user equipment (UE) for uplink signal processing and includes:
acquiring carrier frequency information of at least two carrier frequencies configured by a network device, in which the carrier frequencies are used for transmission of a positioning signal;
acquiring positioning signal resources corresponding to the respective carrier frequencies configured by the network device; and
sending the positioning signal on the basis of the carrier frequency information of the at least two carrier frequencies and the positioning signal resources.

Embodiments in another aspect of the present disclosure provide a method for signal processing, which is performed by an access network device for uplink signal processing and includes:
receiving a positioning signal on positioning signal resources on at least two carrier frequencies; and
measuring the positioning signal to obtain a positioning report, and sending the positioning report to a core network device.

Embodiments in yet another aspect of the present disclosure provide a method for signal processing, which is performed by a core network device for uplink signal processing and includes:
configuring carrier frequency information of at least two carrier frequencies, in which the carrier frequencies are used for transmission of a positioning signal;
configuring positioning signal resources corresponding to the respective carrier frequencies; and
receiving a positioning report sent by an access network device.

Embodiments in yet another aspect of the present disclosure provide an apparatus for signal processing, including:
a first acquiring module, configured to acquire carrier frequency information of at least two carrier frequencies configured by a network device, in which the carrier frequencies are used for transmission of a positioning signal;
a second acquiring module, configured to acquire positioning signal resources corresponding to the respective carrier frequencies configured by the network device; and
a sending module, configured to send the positioning signal on the basis of the carrier frequency information of the at least two carrier frequencies and the positioning signal resources.

Embodiments in yet another aspect of the present disclosure provide an apparatus for signal processing, including:
a first configuring module, configured to configure carrier frequency information of at least two carrier frequencies, in which the carrier frequencies are used for transmission of a positioning signal;
a second configuring module, configured to configure positioning signal resources corresponding to the respective carrier frequencies; and
a receiving module, configured to receive the positioning report sent by an access network device.

Embodiments in yet another aspect of the present disclosure provide an apparatus for signal processing, including:
a receiving module, configured to receive a positioning signal on positioning signal resources on at least two carrier frequencies; and
a processing module, configured to measure the positioning signal to obtain a positioning report, and send the positioning report to a core network device.

Embodiments in yet another aspect of the present disclosure provide a communication apparatus. The communication apparatus includes a processor and a memory, in which the memory is configured to store a computer program therein, and the processor is configured to execute the computer program stored in the memory, such that the apparatus performs the method provided by the embodiments in the above aspect.

Embodiments in yet another aspect of the present disclosure provide a communication apparatus. The communication apparatus includes a processor and a memory, in which the memory is configured to store a computer program therein, and the processor is configured to execute the computer program stored in the memory, such that the apparatus performs the method provided by the embodiments in the above another aspect.

Embodiments in yet another aspect of the present disclosure provide a communication apparatus. The communication apparatus includes a processor and a memory, in which the memory is configured to store a computer program therein, and the processor is configured to execute the computer program stored in the memory, such that the apparatus performs the method provided by the embodiments in the above yet another aspect.

Embodiments in yet another aspect of the present disclosure provide a communication apparatus, including a processor and an interface circuit, in which
the interface circuit is configured to receive a code instruction and transmit the code instruction to the processor; and
the processor is configured to run the code instruction to perform the method provided by the embodiments in one aspect.

Embodiments in yet another aspect of the present disclosure provide a communication apparatus, including a processor and an interface circuit, in which
the interface circuit is configured to receive a code instruction and transmit the code instruction to the processor; and
the processor is configured to run the code instruction to perform the method provided by the embodiments in another aspect.

Embodiments in yet another aspect of the present disclosure provide a communication apparatus, including a processor and an interface circuit, in which
the interface circuit is configured to receive a code instruction and transmit the code instruction to the processor; and
the processor is configured to run the code instruction to perform the method provided by the embodiments in above yet another aspect.

Embodiments in yet another aspect of the present disclosure provide a computer-readable storage medium. The storage medium has stored instructions that, when being executed, cause the method provided by the embodiments in one aspect to be implemented.

Embodiments in yet another aspect of the present disclosure provide a computer-readable storage medium. The storage medium has stored instructions that, when being executed, cause the method provided by the embodiments in another aspect to be implemented.

Embodiments in yet another aspect of the present disclosure provide a computer-readable storage medium. The storage medium has stored instructions that, when being executed, cause the method provided by the embodiments in yet another aspect to be implemented.

In summary, in the method and the apparatus for signal processing, the device and the storage medium provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

### BRIEF DESCRIPTION OF THE DRAWINGS

The foregoing and/or additional aspects and advantages of the present disclosure will become apparent and easily understood from the description of the embodiments below in conjunction with the accompanying drawings.
FIG. 1a is a schematic flowchart of a method for signal processing provided by an embodiment of the present disclosure.
FIG. 1b is a schematic flowchart of a method for signal processing provided by an embodiment of the present disclosure.
FIGS. 2a-2b are schematic flowcharts of a method for signal processing provided by another embodiment of the present disclosure.
FIG. 3 is a schematic flowchart of a method for signal processing provided by an embodiment of the present disclosure.
FIG. 4 is a schematic flowchart of a method for signal processing provided by another embodiment of the present disclosure.
FIG. 5 is a schematic flowchart of a method for signal processing provided by an embodiment of the present disclosure.
FIG. 6 is a schematic flowchart of a method for signal processing provided by yet another embodiment of the present disclosure.
FIG. 7 is a schematic flowchart of a method for signal processing provided by an embodiment of the present disclosure.
FIG. 8 is a schematic flowchart of a method for signal processing provided by another embodiment of the present disclosure.
FIG. 9a is a schematic flowchart of a method for signal processing provided by another embodiment of the present disclosure.
FIG. 9b is a schematic flowchart of a method for signal processing provided by another embodiment of the present disclosure.
FIG. 10 is a schematic flowchart of a method for signal processing provided by another embodiment of the present disclosure.
FIG. 11 is a schematic flowchart of a method for signal processing provided by another embodiment of the present disclosure.
FIGS. 12a-12b are schematic flowcharts of a method for signal processing provided by another embodiment of the present disclosure.
FIG. 13 is a schematic structural diagram of an apparatus for signal processing provided by another embodiment of the present disclosure.
FIG. 14 is a schematic structural diagram of an apparatus for signal processing provided by another embodiment of the present disclosure.
FIG. 15 is a schematic structural diagram of an apparatus for signal processing provided by another embodiment of the present disclosure.
FIG. 16 is a block diagram of a terminal device provided by an embodiment of the present disclosure.
FIG. 17 is a block diagram of a network device provided by an embodiment of the present disclosure.

### DETAILED DESCRIPTION

Exemplary embodiments will be described in detail herein, and examples thereof are shown in the accompanying drawings. When the following description involves the accompanying drawings, unless otherwise indicated, the same numbers in different accompanying drawings indicate the same or similar elements. The implementations described in the following exemplary embodiments are not all the implementations consistent with the embodiments of the present disclosure. On the contrary, these embodiments are examples of apparatuses and methods consistent with some aspects of the present disclosure, as detailed in the appended claims.

The terms used in the embodiments of the present disclosure are for the purpose of describing particular embodiments only and are not intended to limit the embodiments of the present disclosure. The singular forms "a/an" and "the" used in the embodiments and the appended claims of the present disclosure are intended to include the plural forms as well, unless the context clearly indicated otherwise. It should also be understood that the term "and/or" as used herein includes any and all combinations of one or more related listed items.

It should be understood that, although the terms "first", "second", "third", etc. may be used to describe various information in the embodiments of the present disclosure, these should not be limited to these terms. These terms are only used to distinguish information of the same type from each other. For example, "first information" may also be referred to as "second information" without departing from the scope of the embodiments of the present disclosure. Similarly, "second information" may also be referred to as "first information". Depending on the context, the words "in case of" and "if' as used here may be interpreted as "in a case that" or "when" or "in response to determining that".

A method for signal processing and apparatus, a device and a storage medium provided by embodiments of the present disclosure will be described in detail below by reference to the accompanying drawings.

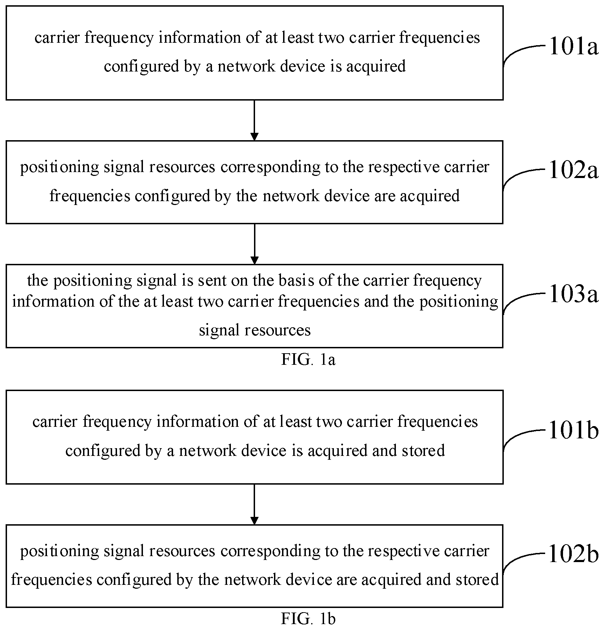

FIG. 1a is a schematic flowchart of a method for signal processing provided by an embodiment of the present disclosure. The method is performed by user equipment (UE) and can be used for uplink positioning. As shown in FIG. 1a, the method may include the following steps 101a-103a.

In step 101a, carrier frequency information of at least two carrier frequencies configured by a network device is acquired.

In an embodiment of the present disclosure, the UE may refer to a device that provides voice and/or data connectivity to a user. The terminal device may communicate with one or more core networks via a radio access network (RAN). The UE may be an IoT terminal, such as a sensor device, a mobile phone (or a "cellular" phone) and a computer with an IoT terminal, for example, may be a fixed, portable, pocket-sized, handheld, or a device mounted in a computer or vehicle. For example, the UE may be a station (STA), a subscriber unit, a subscriber station, a mobile station, a mobile, a remote station, an access point, a remote terminal, an access terminal, a user terminal or a user agent. Alternatively, the UE may also be a device for an unmanned aerial vehicle. Alternatively, the UE may also be a vehicular device, for example, may be a trip computer with a wireless communication function, or a wireless terminal connected to an external trip computer. Alternatively, the UE may also be a roadside device, such as a street lamp, a signal lamp or other roadside devices with a wireless communication function.

It should be noted that, in an embodiment of the present disclosure, acquiring the carrier frequency information of the at least two carrier frequencies configured by the network device may include: acquiring, by the UE, the carrier frequency information of the at least two carrier frequencies issued by the network device, in which the carrier frequency information of the at least two carrier frequencies issued by the network device may be issued by the network device to the UE. In another embodiment of the present disclosure, acquiring the carrier frequency information of the at least two carrier frequencies configured by the network device may include: reading, by the UE, locally stored carrier frequency information of the at least two carrier frequencies previously issued by the network device. That is to say, after the UE acquires the carrier frequency information of the at least two carrier frequencies issued by the network device, the UE may locally store the carrier frequency information of the at least two carrier frequencies, and then may directly read the carrier frequency information of the at least two carrier frequencies from the local storage.

In an embodiment of the present disclosure, the network device may include at least one of:
a core network device; or
an access network device.

Also, in an embodiment of the present disclosure, the core network device may be a location management function network element. The location management function network element may include a location server. Also, the location server may be implemented as any one of:
a location management function (LMF)
an enhanced serving mobile location centre (E-SMLC);
a secure user plane location (SUPL); or
a SUPL location platform (SUPL SLP).

Further, in an embodiment of the present disclosure, the access network device may include at least one of:
a base station; or
a transmission-reception point (TRP).

In addition, in an embodiment of the present disclosure, the carrier frequencies described above may be used for transmission of a positioning signal, and the positioning signal may be configured to implement carrier phase-based positioning. Also, the positioning signal may be an uplink positioning signal. Specifically, the positioning signal may be a sounding reference signal (SRS), or new reference signals for uplink positioning.

Also, in an embodiment of the present disclosure, the carrier frequency information may include at least one of:
an identity (ID) of each carrier frequency;
a carrier frequency combination ID corresponding to at least two carrier frequencies;
a starting frequency point position of each carrier frequency; or
an end frequency point position of each carrier frequency.

In step 102a, positioning signal resources corresponding to the respective carrier frequencies configured by the network device are acquired.

In an embodiment of the present disclosure, the acquiring the positioning signal resources corresponding to the respective carrier frequencies configured by the network device may include: acquiring, by the UE, the positioning signal resources corresponding to the respective carrier frequencies issued by the network device, in which the positioning signal resources corresponding to the respective carrier frequencies issued by the network device may be issued by the network device to the UE. In another embodiment of the present disclosure, the acquiring the positioning signal resources corresponding to the respective carrier frequencies configured by the network device may include: reading, by the UE, locally stored positioning signal resources corresponding to the respective carrier frequencies previously configured by the network device. That is to say, after acquiring the positioning signal resources corresponding to the respective carrier frequencies issued by the network device, the UE may locally store the positioning signal resources corresponding to the respective carrier frequencies, and then may directly read the positioning signal resources corresponding to the respective carrier frequencies from the local storage.

Also, in an embodiment of the present disclosure, the UE may specifically acquire the positioning signal resources corresponding to the respective carrier frequencies by acquiring parameter information of the positioning signal resources corresponding to the respective carrier frequencies configured by the network device. The parameter information may include at least one of:
a positioning signal resource ID;
a positioning signal resource set ID;
a transmission cycle;
a slot offset;
a number of symbols occupied;
a comb-size;
a starting symbol position;
a sub-carrier spacing (SCS);
quasi-colocation (QCL) information;
a carrier frequency bandwidth;
a starting physical resource block (PRB) position;
a P0 value and an alpha value corresponding to a power control parameter; or
a pathlossReferenceRS.

In steps 103a, the positioning signal is sent on the basis of the carrier frequency information of the at least two carrier frequencies and the positioning signal resources.

In an embodiment of the present disclosure, the UE may send the positioning signal on the positioning signal resources on the at least two carrier frequencies on the basis of the positioning signal resources and the carrier frequency information of the at least two carrier frequencies, such that the access network device may receive and measure the positioning signal to obtain a positioning report and report the positioning report to the core network device for uplink positioning.

In an embodiment of the present disclosure, the positioning report may include at least one of:
an integer number of complete phase cycles;
a fractional part of phase less than a complete cycle;
phase error group information when the access network device receives the positioning signal, the phase error group information including an ID of a phase error group and/or an error value corresponding to the phase error group;
reference signal receiving power (RSRP);
an angle of arrival (AoA);
an angle of departure (AoD);
a time of arrival (ToA);
a time difference of arrival (TDoA);
a round trip time (RTT);
an Rx time error group (RxTEG);
a Tx time error group (TxTEG); or
a Tx Rx time error group (TxRxTEG).

In summary, in the method for signal processing provided by the embodiments of the present disclosure, the UE can acquire the carrier frequency information of at least two carrier frequencies configured by the network device, in which the carrier frequencies are used for the transmission of a positioning signal; then, the UE can also acquire the positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 1b is a schematic flowchart of a method for signal processing provided by an embodiment of the present disclosure. The method is performed by a UE and can be used for uplink positioning. As shown in FIG. 1b, the method may include the following steps 101b-102b.

In step 101b, carrier frequency information of at least two carrier frequencies configured by a network device is acquired and stored.

In step 102b, positioning signal resources corresponding to the respective carrier frequencies configured by the network device are acquired and stored.

Other detailed description of the steps 101b-102b may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

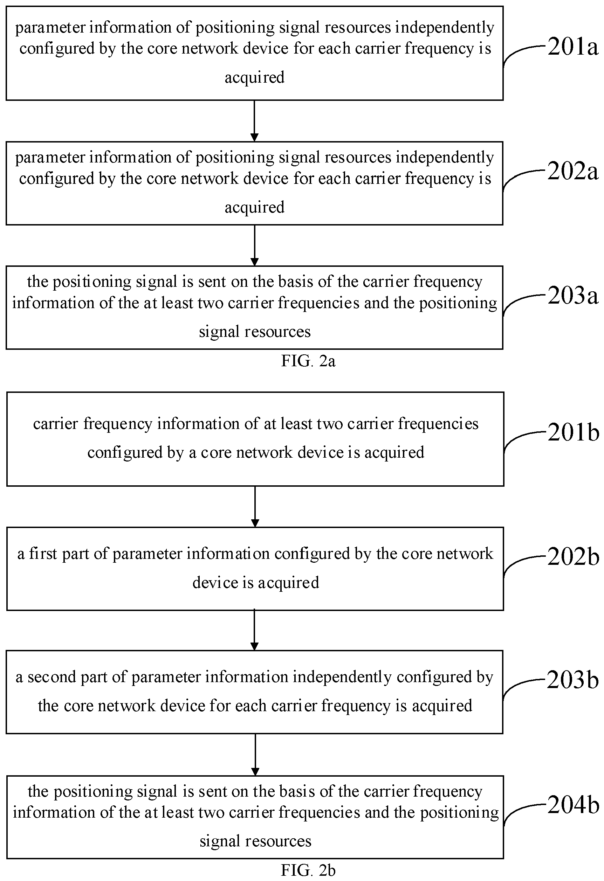

FIG. 2a is a schematic flowchart of a method for signal processing provided by an embodiment of the present disclosure. The method is performed by a UE and can be used for uplink positioning. As shown in FIG. 2a, the method may include the following steps 201a-203a.

In step 201a, carrier frequency information of at least two carrier frequencies configured by a core network device is acquired.

In an embodiment of the present disclosure, the acquiring carrier frequency information of at least two carrier frequencies configured by the core network device may include: acquiring, by the UE, the carrier frequency information of the at least two carrier frequencies issued by the network device, in which the carrier frequency information of the at least two carrier frequencies issued by the core network device may be issued by the core network device to the UE. In another embodiment of the present disclosure, the acquiring the carrier frequency information of at least two carrier frequencies configured by the core network device may include: reading, by the UE, locally stored carrier frequency information of the at least two carrier frequencies previously configured by the core network device. That is to say, after the UE acquires the carrier frequency information of the at least two carrier frequencies issued by the core network device, the UE may locally store the carrier frequency information of the at least two carrier frequencies, and then may directly read the carrier frequency information of the at least two carrier frequencies from the local storage.

In step 202a, parameter information of positioning signal resources independently configured by the core network device for each carrier frequency is acquired.

That is to say, in an embodiment of the present disclosure, the core network device may independently configure parameter information of a set of positioning signal resources for each carrier frequency.

In an embodiment of the present disclosure, the parameter information of the positioning signal resources independently configured corresponding to each carrier frequency may be the same. In another embodiment of the present disclosure, the parameter information of the positioning signal resources independently configured corresponding to each carrier frequency may be different.

Also, in an embodiment of the present disclosure, the acquiring the positioning signal resources corresponding to the respective carrier frequencies configured by the network device may include: acquiring, by the UE, the positioning signal resources corresponding to the respective carrier frequencies issued by the network device, in which the positioning signal resources corresponding to the respective carrier frequencies issued by the core network device may be issued by the core network device to the UE. In another embodiment of the present disclosure, the acquiring the positioning signal resources corresponding to the respective carrier frequencies configured by the core network device may include: reading, by the UE, locally stored positioning signal resources corresponding to the respective carrier frequencies previously configured by the core network device. That is to say, after acquiring the positioning signal resources corresponding to the respective carrier frequencies issued by the core network device, the UE may locally store the positioning signal resources corresponding to the respective carrier frequencies, and then may directly read the positioning signal resources corresponding to the respective carrier frequencies from the local storage.

In step 203a, the positioning signal is sent on the basis of the carrier frequency information of the at least two carrier frequencies and the positioning signal resources.

Other detailed description of steps 201a-203a may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 2b is a schematic flowchart of a method for signal processing provided by an embodiment of the present disclosure. The method is performed by a UE and can be used for uplink positioning. As shown in FIG. 2b, the method may include the following steps 201b-204b.

In step 201b, carrier frequency information of at least two carrier frequencies configured by a core network device is acquired.

In step 202b, a first part of parameter information configured by the core network device is acquired.

In an embodiment of the present disclosure, the first parts of parameter information corresponding to the respective carrier frequencies are the same. That is, the first part of parameter information may be common to the carrier frequencies. In other words, in an embodiment of the present disclosure, the core network device may be configured with the first part of parameter information of a set of positioning signal resources for all carrier frequencies.

For example, in an embodiment of the present disclosure, the first parts of parameter information include, for example, a part of the following parameter information of the positioning signal resources:
a positioning signal resource ID;
a positioning signal resource set ID;
a transmission cycle;
a slot offset;
a number of symbols occupied;
a comb-size;
a starting symbol position;
an SCS;
QCL information;
a carrier frequency bandwidth;
a starting PRB position;
a P0 value and an alpha value corresponding to a power control parameter; or
a pathlossReferenceRS.

For example, in an embodiment of the present disclosure, the first part of parameter information may include, for example, the transmission cycle, the number of symbols occupied, etc.

Also, in an embodiment of the present disclosure, the acquiring the first part of parameter information configured by the core network device may include: acquiring, by the UE, the first part of parameter information issued by the core network device, in which the first part of parameter information configured by the core network device may be issued by the core network device to the UE. In another embodiment of the present disclosure, the acquiring the first part of parameter information configured by the core network device may include: reading, by the UE, a locally stored first part of parameter information previously configured by the core network device. That is, after the UE acquires the first part of parameter information issued by the core network device, the UE may locally store the first part of parameter information, and then may directly read the first part of parameter information from the local storage.

In step 203b, a second part of parameter information independently configured by the core network device for each carrier frequency is acquired.

That is, in an embodiment of the present disclosure, the core network device may independently configure the second part of parameter information of a set of positioning signal resources for each carrier frequency.

In an embodiment of the present disclosure, the second part of parameter information may be parameter information in the above parameter information of the positioning signal resources other than the first part of parameter information.

Also, in an embodiment of the present disclosure, the second parts of parameter information corresponding to the respective carrier frequencies may be the same. In another embodiment of the present disclosure, the second parts of parameter information corresponding to the respective carrier frequencies may be different.

Also, in an embodiment of the present disclosure, the acquiring the first part of parameter information configured by the core network device may include: acquiring, by the UE, a second part of parameter information issued by the core network device, in which the second part of parameter information configured by the core network device may be issued by the core network device to the UE. In another embodiment of the present disclosure, the acquiring the second part of parameter information configured by the core network device may include: reading, by the UE, a locally stored second part of parameter information previously configured by the core network device. That is, after the UE acquires the second part of parameter information issued by the core network device, the UE may locally store the second part of parameter information, and then may directly read the second part of parameter information from the local storage.

In step 204b, the positioning signal is sent on the basis of the carrier frequency information of the at least two carrier frequencies and the positioning signal resources.

Other detailed description of steps 201b-204b may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

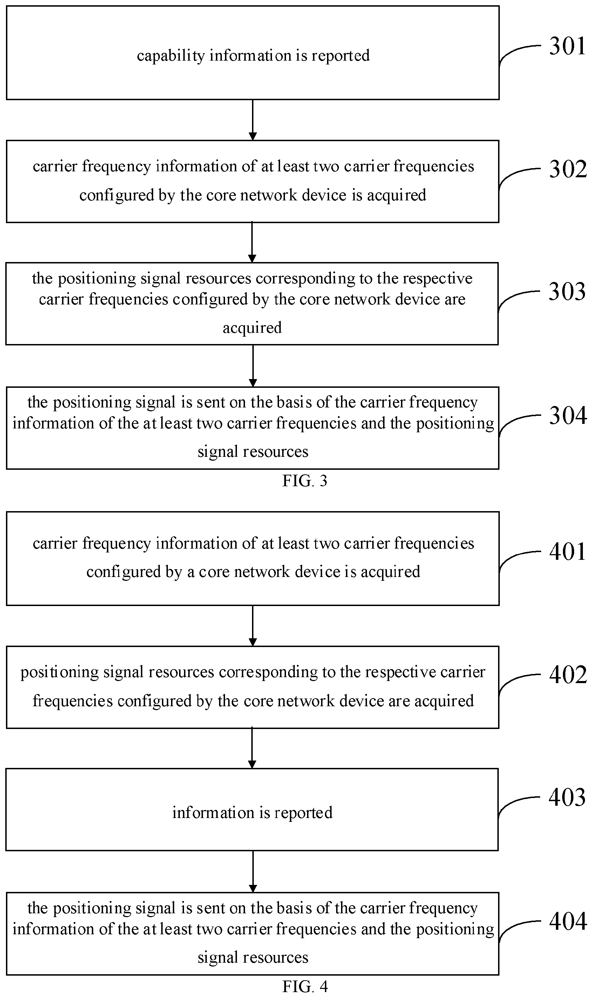

FIG. 3 is a schematic flowchart of a method for signal processing provided by an embodiment of the present disclosure. The method is performed by a UE and can be used for uplink positioning. As shown in FIG. 3, the method may include the following steps 301-304.

In step 301, capability information is reported.

In an embodiment of the present disclosure, the capability information may be configured to indicate whether the UE supports simultaneous transmission of the positioning signal on a plurality of carrier frequencies.

Also, in an embodiment of the present disclosure, the UE may report the capability information to at least one of the core network device and the access network device. Therefore, the core network device may configure the carrier frequency information of at least two carrier frequencies and the positioning signal resources corresponding to the respective carrier frequencies for the UE based on the capability information, and/or the access network device may receive the positioning signal simultaneously and/or non-simultaneously based on the capability information.

In step 302, carrier frequency information of at least two carrier frequencies configured by the core network device is acquired.

In step 303, the positioning signal resources corresponding to the respective carrier frequencies configured by the core network device are acquired.

In an embodiment of the present disclosure, when the capability information indicates that the UE supports the simultaneous transmission of the positioning signal on the plurality of carrier frequencies, the core network device may configure positioning signal resources of the same time domain and/or different time domains on the carrier frequencies, so that the positioning signal on the plurality of carrier frequencies may be transmitted simultaneously or non-simultaneously.

In another embodiment of the present disclosure, when the capability information indicates that the UE does not support simultaneous transmission of the positioning signal on the plurality of carrier frequencies, the core network device can only configure positioning signal resources of different time domains on the carrier frequencies, so that the positioning signal on the plurality of carrier frequencies may be transmitted non-simultaneously.

In step 304, the positioning signal is sent on the basis of the carrier frequency information of the at least two carrier frequencies and the positioning signal resources.

In an embodiment of the present disclosure, when the capability information indicates that the UE supports the simultaneous transmission of the positioning signal on the plurality of carrier frequencies, the core network device may configure positioning signal resources of the same time domain and/or different time domains on the carrier frequencies, and the UE needs to send the positioning signal simultaneously and/or non-simultaneously on the positioning signal resources of the at least two carrier frequencies. In another embodiment of the present disclosure, when the capability information indicates that the UE does not support simultaneous transmission of the positioning signal on the plurality of carrier frequencies, the core network device can only configure positioning signal resources of different time domains on the carrier frequencies, and the UE only needs to non-simultaneously send the positioning signal on the positioning signal resources for the at least two carrier frequencies.

It should be noted that in an embodiment of the present disclosure, the above step 301 is optionally performed. Specifically, in an embodiment of the present disclosure, the UE may report the capability information by performing the above step 301 while sending the positioning signal. In addition, if the capability of whether the UE supports the simultaneous transmission of the positioning signal on the plurality of carrier frequencies is not changed while subsequently sending the positioning signal again, the UE may not perform the above step 301 (i.e., the UE will no longer report the capability information). If the capability of whether the UE supports the simultaneous transmission of the positioning signal on the plurality of carrier frequencies has been changed, the UE may perform the above step 301 (i.e., the UE needs to update and report the capability information).

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 4 is a schematic flowchart of a method for signal processing provided by an embodiment of the present disclosure. The method is performed by a UE and can be used for uplink positioning. As shown in FIG. 4, the method may include the following steps 401-404.

In step 401, carrier frequency information of at least two carrier frequencies configured by a core network device is acquired, in which the carrier frequencies are used for transmission of a positioning signal.

In step 402, positioning signal resources corresponding to the respective carrier frequencies configured by the core network device are acquired.

In step 403, information (e.g., auxiliary information) is reported.

In an embodiment of the present disclosure, the information may include at least one of:
phase error group information when the UE sends the positioning signal, the phase error group information including an ID of a phase error group and/or an error value corresponding to the phase error group; or
timing error group information when the UE sends the positioning signal, the timing error group information including an ID of a timing error group and/or an error value corresponding to the timing error group.

Also, the UE may specifically report the above information to the core network device, so that the core network device may subsequently consider the impact of this error information when performing positioning calculations based on the positioning report, so as to ensure the positioning accuracy. And/or, the UE may specifically report the above information to the access network device, so that the access network device may receive and measure the positioning signal sent by the UE based on the above information, thereby ensuring the positioning accuracy.

In step 404, the positioning signal is sent on the basis of the carrier frequency information of the at least two carrier frequencies and the positioning signal resources.

Other detailed description of steps 401-404 may refer to the description of the above embodiments, which will not be repeated here in the embodiments of the present disclosure.

Also, it should be noted that the above step 403 is optionally performed. Specifically, in an embodiment of the present disclosure, the UE may report the above information by performing the above step 403 while sending the positioning signal. Also, when the UE subsequently sends the positioning signal again, if current information corresponding to the UE (i.e., the phase error group information and/or timing error group information when the UE sends the positioning signal currently) is not changed compared with the information previously reported by the UE, the UE may not perform the above step 403 (i.e., the UE will no longer report the information). If the current information corresponding to the UE has been changed compared with the information previously reported by the UE, the UE may perform the above step 403 (i.e., the UE needs to update and report this information).

In addition, in an embodiment of the present disclosure, the above steps 403 and 404 are not performed in a chronological order, i.e., 403 may precede or follow 404 or may be performed at the same time.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

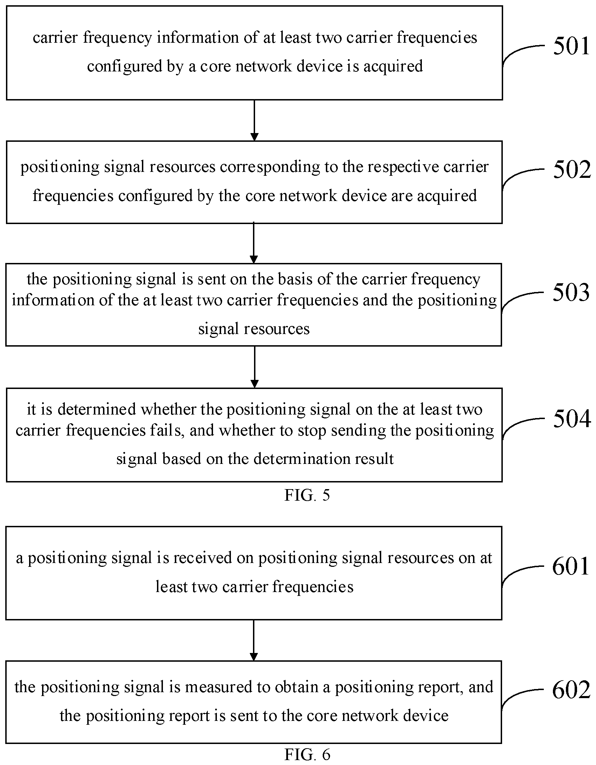

FIG. 5 is a schematic flowchart of a method for signal processing provided by an embodiment of the present disclosure. The method is performed by a UE and can be used for uplink positioning. As shown in FIG. 5, the method may include the following steps 501-504.

In step 501, carrier frequency information of at least two carrier frequencies configured by a core network device is acquired, in which the carrier frequencies are used for transmission of a positioning signal.

In step 502, positioning signal resources corresponding to the respective carrier frequencies configured by the core network device are acquired.

In step 503, the positioning signal is sent on the basis of the carrier frequency information of the at least two carrier frequencies and the positioning signal resources.

In step 504, it is determined whether the positioning signal on the at least two carrier frequencies fails, and whether to stop sending the positioning signal based on the determination result.

Specifically, in an embodiment of the present disclosure, when a positioning signal on a carrier frequency fails, the failed positioning signal renders the measurement result inaccurate, and then precise positioning cannot be realized. At this time, if the carrier frequency still transmits the failed positioning signal, the transmission resources will be wasted and the positioning efficiency will be affected. Therefore, in an embodiment of the present disclosure, it is usually necessary to determine whether the positioning signal on the carrier frequencies fails. Therefore, when the positioning signal is determined to be failed, the transmission of the failed positioning signal is stopped, so as to achieve the purpose of saving transmission resources and ensuring positioning efficiency.

In an embodiment of the present disclosure, the method for determining whether the positioning signal on the at least two carrier frequencies fails may include: determining whether the UE is able to measure RS and/or pathlossReferenceRS indicated by QCL information of the positioning signal on the carrier frequencies; and determining that the positioning signal on the carrier frequencies fail when the UE is unable to measure the RS and/or pathlossReferenceRS indicated by the QCL information of the positioning signal on the carrier frequencies.

Also, in an embodiment of the present disclosure, the method for stopping sending the positioning signal based on the determination result includes: separately determining whether the positioning signal on the respective carrier frequencies fails, and stopping sending the positioning signal on a carrier frequency on which the positioning signal fails. That is, the sending of the positioning signal is stopped only on the carrier frequency on which the positioning signal fails, while the positioning signal continues to be sent on other carrier frequencies on which the positioning signal does not fail.

In another embodiment of the present disclosure, the stopping sending the positioning signal based on the determination result includes: in a case that the positioning signal on any of the carrier frequencies fails, stopping sending the positioning signal on both the failed carrier frequency and another related carrier frequency. The other related carrier frequency may include a carrier frequency that is aggregated together with the failed carrier frequency for the transmission of the same positioning signal, in which if at least two carrier frequencies are used to be aggregated for the transmission of the same positioning signal, the positioning report can be obtained by measuring the positioning signal on the at least two carrier frequencies. Alternatively, the other related carrier frequency may include a carrier frequency that independently transmits a positioning signal different from that on the failed carrier frequency, but the measurement results of the other relevant carrier frequency together with the failed carrier frequency are required to calculate a terminal position.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 6 is a schematic flowchart of a method for signal processing provided by an embodiment of the present disclosure. The method is performed by an access network device and can be used for uplink positioning. As shown in FIG. 6, the method may include the following steps 601-602.

In step 601, a positioning signal is received on positioning signal resources on at least two carrier frequencies.

In an embodiment of the present disclosure, the carrier frequency information of the at least two carrier frequencies and the positioning signal resources corresponding to the respective carrier frequencies may be configured by the core network device for the access network device; or the carrier frequency information of the at least two carrier frequencies and the positioning signal resources corresponding to the respective carrier frequencies are provided by the access network device to the core network device.

Also, the positioning signal may be sent by the UE to the access network device.

In step 602, the positioning signal is measured to obtain a positioning report, and the positioning report is sent to the core network device.

It should also be noted that, in an embodiment of the present disclosure, there may be one or more positioning reports obtained by the access network device.

Specifically, in an embodiment of the present disclosure, at least two carrier frequencies may be aggregated together to transmit the same positioning signal, or to independently transmit different positioning signals respectively. If the at least two carrier frequencies are aggregated to transmit the same positioning signal, one positioning report may be obtained by measuring the positioning signal on the at least two carrier frequencies. If at least two carrier frequencies are configured to transmit different positioning signals independently, more than one positioning reports are obtained by measuring the positioning signal on each carrier frequency separately.

Other detailed description of steps 601-602 may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

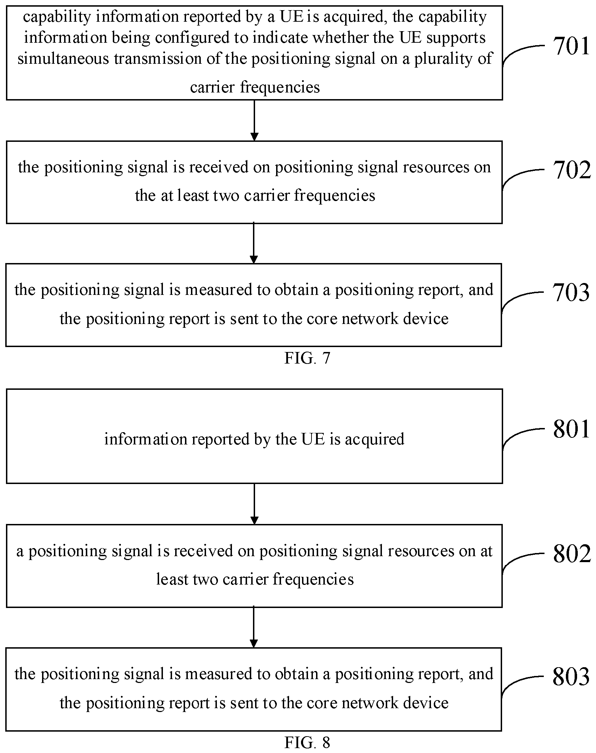

FIG. 7 is a schematic flowchart of a method for signal processing provided by an embodiment of the present disclosure. The method is performed by an access network device and can be used for uplink positioning. As shown in FIG. 7, the method may include the following steps 701-703.

In step 701, capability information reported by a UE is acquired, the capability information being configured to indicate whether the UE supports simultaneous transmission of the positioning signal on a plurality of carrier frequencies.

In step 702, the positioning signal is received on positioning signal resources on the at least two carrier frequencies.

In an embodiment of the present disclosure, the method for receiving the positioning signal on the positioning signal resources on the at least two carrier frequencies may include:
when the capability information reported by the UE indicates that the UE supports the simultaneous transmission of the positioning signal on a plurality of carrier frequencies, receiving, by the access network device, the positioning signal simultaneously and/or non-simultaneously on the positioning signal resources on the at least two carrier frequencies; and
when the capability information reported by the UE indicates that the UE does not support simultaneous transmission of the positioning signal on the plurality of carrier frequencies, receiving, by the access network device, the positioning signal non-simultaneously on the positioning signal resources on the at least two carrier frequencies.

In step 703, the positioning signal is measured to obtain a positioning report, and the positioning report is sent to the core network device.

Other detailed description of steps 701-703 may refer to the description of the above embodiments, which will not be repeated here in the embodiments of the present disclosure.

It should be noted that in an embodiment of the present disclosure, the above step 701 is optionally performed. Specifically, in an embodiment of the present disclosure, the access network device receives the capability information reported by the UE by performing the above step 701 when the access network device receives the positioning signal. Also, if the capability of whether the UE supports the simultaneous transmission of the positioning signal on the plurality of carrier frequencies is not changed when the access network device subsequently receives the positioning signal again, the access network device may not perform the above step 701 (i.e., the access network device will no longer receive the capability information reported by the UE). If the capability of whether the UE supports the simultaneous transmission of the positioning signal on the plurality of carrier frequencies has been changed, the UE may perform the above step 701 (i.e., the access network device receives an updated capability information reported by the UE).

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 8 is a schematic flowchart of a method for signal processing provided by an embodiment of the present disclosure. The method is performed by an access network device and can be used for uplink positioning. As shown in FIG. 8, the method may include the following steps 801-803.

In step 801, information (e.g., auxiliary information) reported by the UE is acquired.

In an embodiment of the present disclosure, the information may include at least one of:
phase error group information when the UE sends the positioning signal, the phase error group information including an ID of a phase error group and/or an error value corresponding to the phase error group; or
timing error group information when the UE sends the positioning signal, the timing error group information including an ID of a timing error group and/or an error value corresponding to the timing error group.

In step 802, a positioning signal is received on positioning signal resources on at least two carrier frequencies.

In step 803, the positioning signal is measured to obtain a positioning report, and the positioning report is sent to the core network device.

Other detailed description of steps 801-803 may refer to the description of the above embodiments, which will not be repeated here in the embodiments of the present disclosure.

Also, it should be noted that the above step 801 is optionally performed. Specifically, in an embodiment of the present disclosure, the access network device may report the above information reported by the UE by performing the above step 801 when the access network device receives the positioning signal. Also, when the UE subsequently receives the positioning signal again, if the current information corresponding to the UE (i.e., the phase error group information and/or timing error group information when the UE sends the positioning signal currently) is not changed compared with the information previously reported by the UE, the access network device may not perform the above step 801 (i.e., the access network device will no longer report this information reported by the UE). If the information corresponding to the UE currently has been changed compared with the information previously reported by the UE, the UE may perform the above step 801 (i.e., the access network device needs to receive updated information reported by the UE).

In addition, in an embodiment of the present disclosure, the above steps 801 and 802 are not performed in a chronological order, i.e., step 801 may performed before or after step 802 or they may be performed at the same time.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

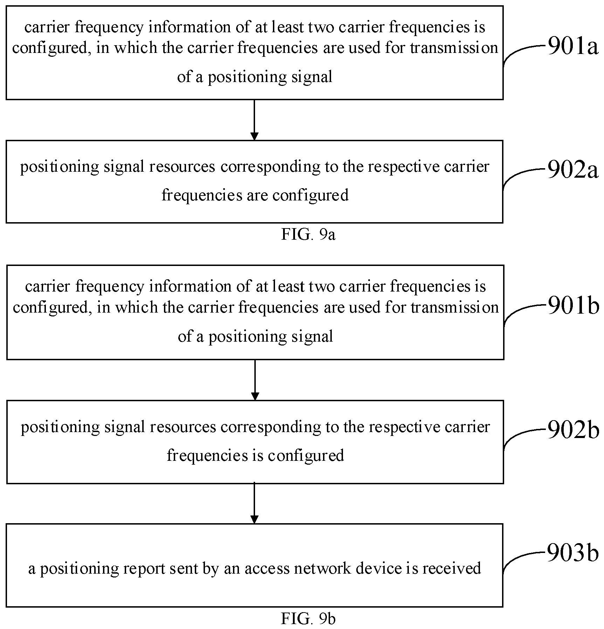

FIG. 9a is a schematic flowchart of a method for signal processing provided by an embodiment of the present disclosure. The method is performed by a core network device, and can be used for uplink positioning. As shown in FIG. 9a, the method may include the following steps 901a-902a.

In step 901a, carrier frequency information of at least two carrier frequencies is configured, in which the carrier frequencies are used for transmission of a positioning signal.

In an embodiment of the present disclosure, the core network device may configure carrier frequency information of the at least two carrier frequencies to the UE and/or the access network device.

In step 902a, positioning signal resources corresponding to the respective carrier frequencies are configured.

In an embodiment of the present disclosure, the core network device may configure the positioning signal resources corresponding to the respective carrier frequencies to the UE and/or the access network device.

Other detailed description of steps 901a-902a may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 9b is a schematic flowchart of a method for signal processing provided by an embodiment of the present disclosure. The method is performed by a core network device, and can be used for uplink positioning. As shown in FIG. 9b, the method may include the following steps 901b-903b.

In step 901b, carrier frequency information of at least two carrier frequencies is configured, in which the carrier frequencies are used for transmission of a positioning signal.

In step 902b, positioning signal resources corresponding to the respective carrier frequencies is configured.

In step 903b, a positioning report sent by an access network device is received.

Other detailed description of steps 901b-903b may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

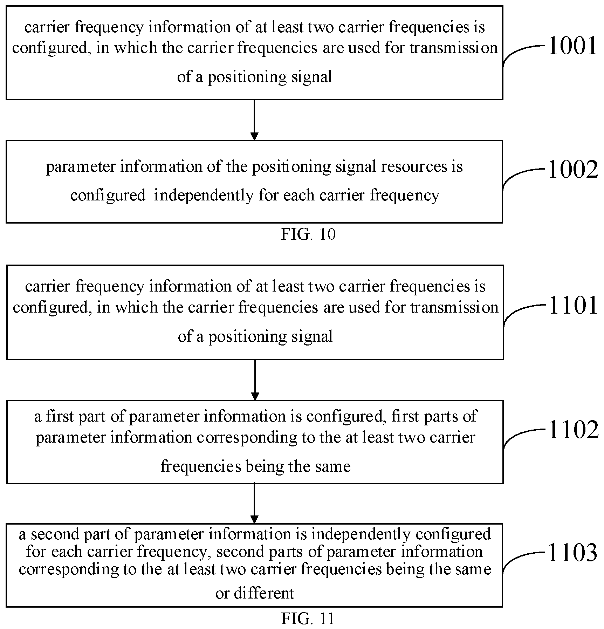

FIG. 10 is a schematic flowchart of a method for signal processing provided by an embodiment of the present disclosure. The method is performed by a core network device, and can be used for uplink positioning. As shown in FIG. 10, the method may include the following steps 1001-1002

In step 1001, carrier frequency information of at least two carrier frequencies is configured, in which the carrier frequencies are used for transmission of a positioning signal.

In step 1002, parameter information of the positioning signal resources is configured independently for each carrier frequency, the parameter information of the positioning signal resources independently configured by the core network device for each carrier frequency being the same or different.

Other detailed description of steps 1001-1002 may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 11 is a schematic flowchart of a method for signal processing provided by an embodiment of the present disclosure. The method is performed by a core network device, and can be used for uplink positioning. As shown in FIG. 11, the method may include the following steps 1101-1103

In step 1101, carrier frequency information of at least two carrier frequencies is configured, in which the carrier frequencies are used for transmission of a positioning signal.

In step 1102, a first part of parameter information is configured, first parts of parameter information corresponding to the at least two carrier frequencies being the same.

In step 1103, a second part of parameter information is independently configured for each carrier frequency, second parts of parameter information corresponding to the at least two carrier frequencies being the same or different.

Other detailed description of steps 1101-1103 may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

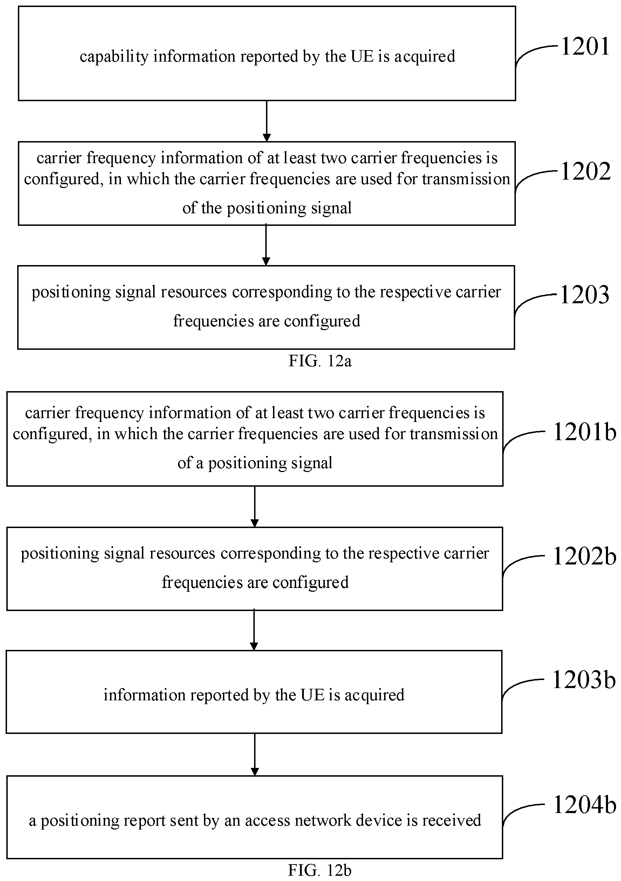

FIG. 12a is a schematic flowchart of a method for signal processing provided by an embodiment of the present disclosure. The method is performed by a core network device, and can be used for uplink positioning. As shown in FIG. 12a, the method may include the following steps 1201a-1202a.

In step 1201a, capability information reported by the UE is acquired, the capability information being configured to indicate whether the UE supports simultaneous transmission of the positioning signal on a plurality of carrier frequencies.

In step 1202a, carrier frequency information of at least two carrier frequencies is configured, in which the carrier frequencies are used for transmission of the positioning signal.

In step 1203a, positioning signal resources corresponding to the respective carrier frequencies are configured.

In an embodiment of the present disclosure, the method for configuring the positioning signal resources corresponding to the respective carrier frequencies may include:
configuring positioning signal resources of the same time domain or different time domains for the carrier frequencies when the capability information indicates that the UE supports the simultaneous transmission of the positioning signal on a plurality of carrier frequencies; and
configuring positioning signal resources of different time domains for the respective carrier frequencies when the capability information indicates that the UE does not support the simultaneous transmission of the positioning signal on the plurality of carrier frequencies.

Other detailed description of steps 1201a-1203a may refer to the description of the above embodiments, which will not be repeated here in the embodiments of the present disclosure.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

FIG. 12b is a schematic flowchart of a method for signal processing provided by an embodiment of the present disclosure. The method is performed by a core network device, and can be used for uplink positioning. As shown in FIG. 12b, the method may include the following steps 1201b-1204b.

In step 1201b, carrier frequency information of at least two carrier frequencies is configured, in which the carrier frequencies are used for transmission of a positioning signal.

In step 1202b, positioning signal resources corresponding to the respective carrier frequencies are configured.

In step 1203b, information (e.g., auxiliary information) reported by the UE is acquired.

In an embodiment of the present disclosure, the information may include at least one of:
phase error group information when the UE sends the positioning signal, the phase error group information including an ID of a phase error group and/or an error value corresponding to the phase error group; or
timing error group information when the UE sends the positioning signal, the timing error group information including an ID of a timing error group and/or an error value corresponding to the timing error group.

In step 1204b, a positioning report sent by an access network device is received.

Other detailed description of steps 1201b-1204b may refer to the description of the above embodiments, which will not be repeated here in the embodiments of the present disclosure.

The steps 1203b and 1204b are not performed in a chronological order, in which step 1203b may precede or follow step 1204b or may be performed at the same time.

In summary, in the method for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to the respective carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

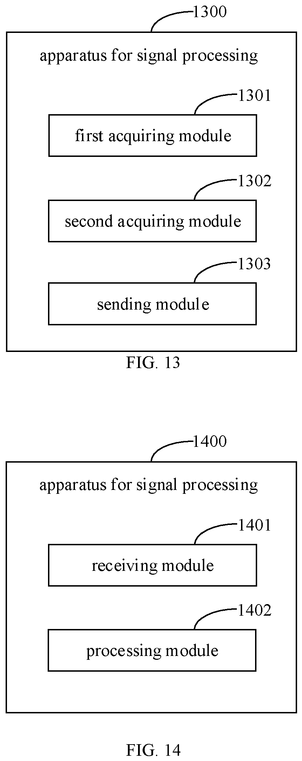

FIG. 13 is a schematic structural diagram of an apparatus for signal processing provided by an embodiment of the present disclosure. As shown in FIG. 13, the apparatus may include:
a first acquiring module, configured to acquire carrier frequency information of at least two carrier frequencies configured by a network device, in which the carrier frequencies are used for transmission of a positioning signal;
a second acquiring module, configured to acquire positioning signal resources corresponding to the respective carrier frequencies configured by the network device; and
a sending module, configured to send the positioning signal on the basis of the carrier frequency information of the at least two carrier frequencies and the positioning signal resources.

In summary, in the apparatus for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

Optionally, in an embodiment of the present disclosure, the carrier frequency information includes at least one of:
an identity (ID) of each carrier frequency;
a carrier frequency combination ID corresponding to at least two carrier frequencies;
a starting frequency point position of each carrier frequency; or
an end frequency point position of each carrier frequency.

Optionally, in an embodiment of the present disclosure, the positioning signal is configured to implement carrier phase-based positioning.

Optionally, in an embodiment of the present disclosure, the second acquiring module is further configured to:
acquire parameter information of the positioning signal resources corresponding to the respective carrier frequencies configured by the network device, the parameter information including at least one of:
a positioning signal resource ID;
a positioning signal resource set ID;
a transmission cycle;
a slot offset;
a number of symbols occupied;
a comb-size;
a starting symbol position;
a sub-carrier spacing (SCS);
quasi-colocation (QCL) information;
a carrier frequency bandwidth;
a starting physical resource block (PRB) position;
a P0 value and an alpha value corresponding to a power control parameter; or
a pathlossReferenceRS.

Optionally, in an embodiment of the present disclosure, the second acquiring module is further configured to:
receive parameter information of positioning signal resources independently configured by the network device for each carrier frequency, the parameter information of the positioning signal resources independently configured by the core network device for each carrier frequency being the same or different.

Optionally, in an embodiment of the present disclosure, the second acquiring module is further configured to:
acquire a first part of parameter information configured by the network device, first parts of parameter information corresponding to the at least two carrier frequencies being the same; and
acquire a second part of parameter information independently configured by the network device for each carrier frequency, the second parts of parameter information corresponding to the at least two carrier frequencies being the same or different.

Optionally, in an embodiment of the present disclosure, the apparatus is further configured to:
report capability information, the capability information being configured to indicate whether the UE supports simultaneous transmission of the positioning signal on a plurality of carrier frequencies.

Optionally, in an embodiment of the present disclosure, the apparatus is further configured to:
report information;
the information including at least one of:
   phase error group information when the UE sends the positioning signal, the phase error group information including an ID of a phase error group and/or an error value corresponding to the phase error group; or
   timing error group information when the UE sends the positioning signal, the timing error group information including an ID of a timing error group and/or an error value corresponding to the timing error group.

Optionally, in an embodiment of the present disclosure, the apparatus is further configured to:
determine whether the positioning signal on the at least two carrier frequencies fails, and whether to stop sending the positioning signal based on the determination result.

Optionally, in an embodiment of the present disclosure, the apparatus is further configured to:
separately determine whether the positioning signal on the carrier frequencies fails; and
stop sending the positioning signal on a carrier frequency on which the positioning signal fails.

Optionally, in an embodiment of the present disclosure, the apparatus is further configured to:
in a case that the positioning signal on any of the carrier frequencies fails, stop sending the positioning signal on both the carrier frequencies and another related carrier frequency.

Optionally, in an embodiment of the present disclosure, the apparatus is further configured to
determine whether the UE is able to measure RS and/or pathlossReferenceRS indicated by QCL information of the positioning signal on the carrier frequencies; and
determine that the positioning signal on the carrier frequency fails in response to the UE being unable to measure the RS and/or pathlossReferenceRS indicated by the QCL information of the positioning signal on the carrier frequencies.

Optionally, in an embodiment of the present disclosure, the network device includes a core network device and/or an access network device.

FIG. 14 is a schematic structural diagram of an apparatus for signal processing provided by an embodiment of the present disclosure. As shown in FIG. 14, the apparatus may include:
a receiving module, configured to receive a positioning signal on positioning signal resources on at least two carrier frequencies; and
a processing module, configured to measure the positioning signal to obtain a positioning report, and send the positioning report to a core network device.

In summary, in the apparatus for signal processing provided by the embodiments of the present disclosure, the UE can acquire carrier frequency information of at least two carrier frequencies configured by the network device, in which the carrier frequencies are used for the transmission of a positioning signal; then, the UE can also acquire positioning signal resources corresponding to carrier frequencies configured by the network device; and further, the UE can send the positioning signal on the basis of the carrier frequency information of the at least two carrier frequencies and the positioning signal resources, so that the network device can receive and measure the positioning signal to obtain a positioning report and report the positioning report to the core network device. It can thus be seen that a method for configuring the multi-carrier-frequency positioning signal and a method for reporting a measurement report are provided in the present disclosure with regard to a multi-carrier-frequency scenario, thereby solving the technical problems of how to configure the multi-carrier-frequency positioning signal and how to report a measurement report.

Optionally, in an embodiment of the present disclosure, the positioning signal is configured to implement carrier phase-based positioning.

Optionally, in an embodiment of the present disclosure, the apparatus is further configured to:
acquire capability information reported by a UE, the capability information being configured to indicate whether the UE supports simultaneous transmission of the positioning signal on a plurality of carrier frequencies.

Optionally, in an embodiment of the present disclosure, the receiving module is further configured to:
receive the positioning signal simultaneously on the positioning signal resources on the at least two carrier frequencies; and/or
receive the positioning signal non-simultaneously on the positioning signal resources on the at least two carrier frequencies.

Optionally, in an embodiment of the present disclosure, the apparatus is further configured to:
acquire information reported by the UE;
the information including at least one of:
   phase error group information when the UE sends the positioning signal, the phase error group information including an ID of a phase error group and/or an error value corresponding to the phase error group; or
   timing error group information when the UE sends the positioning signal, the timing error group information including an ID of a timing error group and/or an error value corresponding to the timing error group.

Optionally, in an embodiment of the present disclosure, the positioning report may include at least one of:
an integer number of complete phase cycles;
a fractional part of phase less than a complete cycle;
phase error group information when the access network device receives the positioning signal, the phase error group information including an ID of a phase error group and/or an error value corresponding to the phase error group;
an RSRP;
an AoA;
an AoD;
a ToA;
a TDoA;
an RTT;
an RxTEG;
a TxTEG; or
a TxRxTEG.

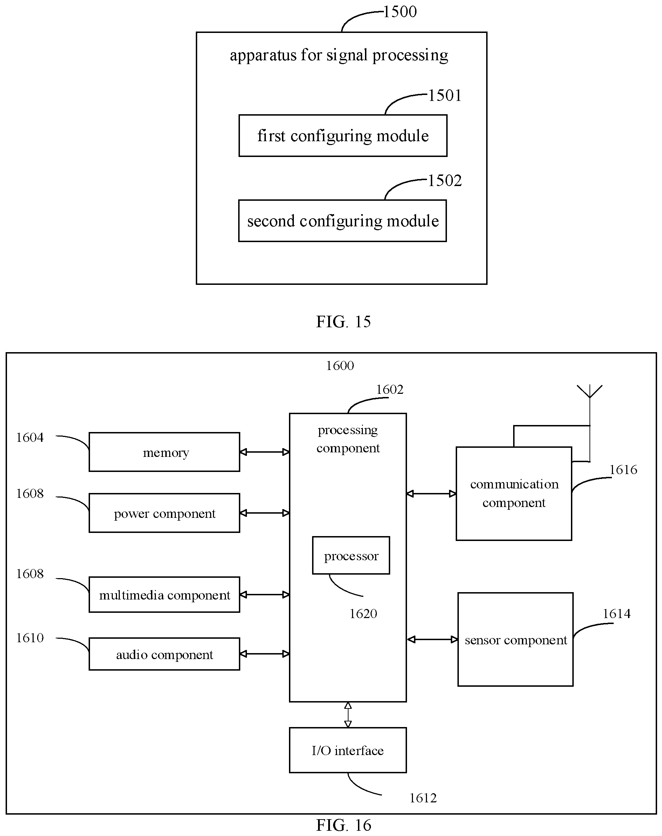

FIG. 15 is a schematic structural diagram of an apparatus for signal processing provided by an embodiment of the present disclosure. As shown in FIG. 15, the apparatus may include:
a first configuring module, configured to configure carrier frequency information of at least two carrier frequencies, in which the carrier frequencies are used for transmission of a positioning signal; and
a second configuring module, configured to configure positioning signal resources corresponding to the respective carrier frequencies.

Optionally, in an embodiment of the present disclosure, the carrier frequency information includes at least one of:
ID of each carrier frequency;
a carrier frequency combination ID corresponding to at least two carrier frequencies;
a starting frequency point position of each carrier frequency; or
an end frequency point position of each carrier frequency.

Optionally, in an embodiment of the present disclosure, the apparatus is further configured to:
receive a positioning report sent by an access network device.

Optionally, in an embodiment of the present disclosure, the positioning signal is configured to implement carrier phase-based positioning.

Optionally, in an embodiment of the present disclosure, the second configuring module is further configured to:
configure parameter information of the positioning signal resources corresponding to the respective carrier frequencies, the parameter information including at least one of:
a positioning signal resource ID;
a positioning signal resource set ID;
a transmission cycle;
a slot offset;
a number of symbols occupied;
a comb-size;
a starting symbol position;
an SCS;
QCL information;
a carrier frequency bandwidth;
a starting PRB position;
a P0 value and an alpha value corresponding to a power control parameter; or
a pathlossReferenceRS.

Optionally, in an embodiment of the present disclosure, the second configuring module is further configured to:
configure the parameter information of the positioning signal resources independently for the each carrier frequency, the parameter information of the positioning signal resources corresponding to each carrier frequency being the same or different.

Optionally, in an embodiment of the present disclosure, the second configuring module is further configured to:
configure a first part of parameter information, first parts of parameter information corresponding to the at least two carrier frequencies being the same; and
configure a second part of parameter information independently for the carrier frequencies, the second parts of parameter information corresponding to the at least two carrier frequencies being the same or different.

Optionally, in an embodiment of the present disclosure, the apparatus is further configured to:
acquire capability information reported by a UE, the capability information being configured to indicate whether the UE supports simultaneous transmission of the positioning signal on a plurality of carrier frequencies.

Optionally, in an embodiment of the present disclosure, the second configuring module is further configured to:
configure positioning signal resources of the same time domain and/or different time domains for the carrier frequencies, in response to the capability information indicating that the UE supports the simultaneous transmission of the positioning signal on a plurality of carrier frequencies; and
configure positioning signal resources of different time domains for the carrier frequencies in response to the capability information indicating that the UE does not support simultaneous transmission of the positioning signal on the plurality of carrier frequencies.

Optionally, in an embodiment of the present disclosure, the apparatus is further configured to:
acquire information reported by the UE;
the information including at least one of:
   phase error group information when the UE sends the positioning signal, the phase error group information including an ID of a phase error group and/or an error value corresponding to the phase error group; or
   timing error group information when the UE sends the positioning signal, the timing error group information including an ID of a timing error group and/or an error value corresponding to the timing error group.

Optionally, in an embodiment of the present disclosure, the positioning report may include at least one of:
an integer number of complete phase cycles;
a fractional part of phase less than a complete cycle;
phase error group information when the access network device receives the positioning signal, the phase error group information including an ID of a phase error group and/or an error value corresponding to the phase error group;
an RSRP;
an AoA;
an AoD;
a ToA;
a TDoA;
an RTT;
an RxTEG;
a TxTEG; or
a TxRxTEG.

FIG. 16 is a block diagram of a terminal device UE 1600 provided by an embodiment of the present disclosure. For example, the UE 1600 may be a mobile phone, a computer, a digital broadcast terminal device, a message transceiver device, a game console, a tablet device, a medical device, a fitness device, a personal digital assistant, or the like.

Referring to FIG. 16, the UE 1600 may include one or more of the following components: a processing component 1602, a memory 1604, a power component 1606, a multimedia component 1608, an audio component 1610, an input/output (I/O) interface 1612, a sensor component 1613, and a communication component 1616.

The processing component 1602 typically controls overall operations of the UE 1600, such as the operations associated with display, telephone calls, data communications, camera operations, and recording operations. The processing component 1602 may include at least one processor 1616 to execute instructions to complete all or part of the steps of the method described above. Moreover, the processing component 1602 may include at least one module which facilitates the interaction between the processing component 1602 and other components. For instance, the processing component 1602 may include a multimedia module to facilitate the interaction between the multimedia component 1608 and the processing component 1602.

The memory 1604 is configured to store various types of data to support operations in the UE 1600. Examples of such data include instructions for any applications or methods operated on the UE 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the UE 1600. The power component 1606 may include a power management system, one or more power sources, and any other components associated with the generation, management, and distribution of power in the UE 1600.

The multimedia component 1608 includes a screen providing an output interface between the UE 1600 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 1608 includes a front camera and/or a rear camera. The front camera and/or the rear camera may receive an external multimedia datum while the UE 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) that is configured to receive external audio signals when the UE 1600 is in operating modes such as Call Mode, Record Mode, and Speech Recognition Mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1613 includes one or more sensors to provide status assessments of various aspects of the UE 1600. For instance, the sensor component 1613 may detect an open/closed status of the device 1600, relative positioning of components, e.g., a display and a keypad, of the UE 1600, a change in position of the UE 1600 or a component of the UE 1600, a presence or absence of user contact with the UE 1600, an orientation or an acceleration/deceleration of the UE 1600, and a change in temperature of the UE 1600. The sensor assembly 1613 may include a proximity sensor configured to detect the presence of nearby objects without any physical contact. The sensor component 1613 may also include a light sensor, such as a CMOS or CCD image sensor, for use in imaging applications. In some embodiments, the sensor component 1613 may also include an accelerometer sensor, a gyroscope sensor, a magnetic sensor, a pressure sensor, or a temperature sensor.

The communication component 1616 is configured to facilitate wired or wireless communication between the UE 1600 and other devices. The UE 1600 may access a wireless network based on a communication standard, such as WiFi, 2G, or 3G, or their combination. In an exemplary embodiment, the communication component 1616 receives a broadcast signal or broadcast associated information from an external broadcast management system via a broadcast channel. In an exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

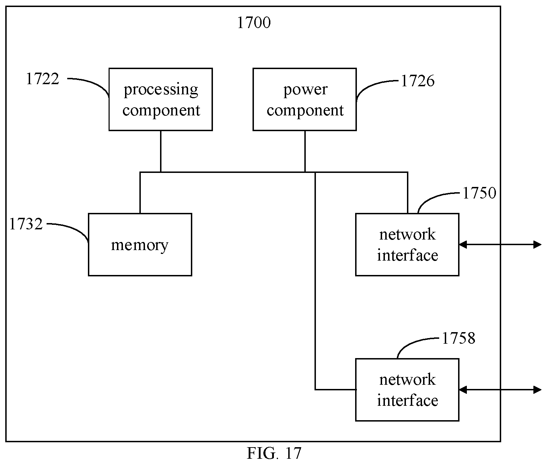

FIG. 17 is a block diagram of a network device 1700 provided by an embodiment of the present disclosure. For example, the network device 1700 may be provided as a network device. Referring to FIG. 17, the network device 1700 may include a processing component 1711 which further includes one or more processors, and memory resources represented by a memory 1732 for storing instructions executable by the processing component 1722, such as applications. The applications stored in the memory 1732 may include one or more modules, each corresponding to a set of instructions. In addition, the processing component 1726 is configured to execute instructions to execute any method of the above methods applied to the network device, for example, as shown in FIG. 1.

The network device 1700 may also include a power component 1726 configured to perform power management for the network device 1700, a wired or wireless network interface 1750 configured to connect the network device 1700 to a network, and an I/O interface 1758. The network device 1700 may operate based on an operating system stored in the memory 1732, such as Windows Server TM, Mac OS XTM, UnixTM, LinuxTM, FreeBSDTM or analogs.

In the above embodiments provided in the present disclosure, the methods provided in the embodiments of the present disclosure are introduced from the perspectives of the network device and the UE, respectively. In order to achieve various functions in the methods provided by the embodiments of the present disclosure, the network device and the UE may implement various functions in the form of a hardware structure, a software module, or a hardware structure and a software module. A function in the various functions may be implemented in the form of a hardware structure, a software module, or a hardware structure and a software module.

In the above embodiments provided in the present disclosure, the methods provided in the embodiments of the present disclosure are introduced from the perspectives of the network device and the UE, respectively. In order to achieve various functions in the methods provided by the embodiments of the present disclosure, the network device and the UE may implement various functions in the form of a hardware structure, a software module, or a hardware structure and a software module. A function in the various functions may be implemented in the form of a hardware structure, a software module, or a hardware structure and a software module.

An embodiment of the present disclosure provides a communication apparatus. The communication apparatus may include a transceiving module and a processing module. The transceiving module may include a sending module and/or a receiving module. The sending module is configure to implement a sending function. The receiving module is configured to implement a receiving function. The transceiving module can implement both the sending function and/or the receiving function.

The communication apparatus may be a terminal device (e.g., the terminal device in the above method embodiments), or an apparatus in the terminal device, or an apparatus being able to match the terminal device. Alternatively, the communication apparatus may be a network device, or an apparatus in the network device, or an apparatus being able to match the network device.

An embodiment of the present disclosure provides another communication apparatus. The communication apparatus may be a network device; or a terminal device (e.g., the terminal device in the above method embodiments); or a chip, a chip system, or a processor, etc., that supports the network device to implement the above methods; or a chip, a chip system, or a processor, etc., that supports the terminal device to implement the above methods. The apparatus may be configured to implement the methods described in the above method embodiments, and details may refer to the description in the above method embodiments.

The communication apparatus may include one or more processors. The processor may be a general-purpose processor or a special-purpose processor, etc. For example, the processor may be a baseband processor or a central processor. The baseband processor may be configured to process a communication protocol and communication data. The central processor may be configured to control the communication apparatus (e.g., a network device, a baseband chip, a terminal device, a terminal device chip, DU or CU) to execute a computer program and process computer program data.

Optionally, the communication apparatus may also include one or more memories having a computer program stored thereon. The processor executes the computer program, so that the communication apparatus performs the methods described in the above method embodiments. Optionally, data may also be stored in the memory. The communication apparatus and the memory may be arranged separately or integrated together.

Optionally, the communication apparatus may further include a transceiver and an antenna. The transceiver may be referred to as a transceiving unit, a transceiving machine, or a transceiving circuit, etc., which are configured to implement a transceiving function. The transceiver may include a receiver and a sender. The receiver may be referred to as a receiving machine or a receiving circuit, etc., which are configured to implement a receiving function. The sender may be referred to as a sending machine or a sending circuit, etc., which are configured to implement a sending function.

Optionally, the communication apparatus may include one or more interface circuits. The interface circuit is configured to receive a code instruction and transmit the code instruction to the processor. The processor is configured to run the code instruction, such that the communication apparatus performs the methods described in the above method embodiments.

The communication apparatus is a terminal device (e.g., the terminal device in the above method embodiments): the processor is configured to perform any of the methods shown in FIGS. 1-4.

The communication apparatus is a network device: the transceiver is configured to perform any of the methods shown in FIGS. 5-7.

In one implementation, the processor may include a transceiver for implementing both a receiving function and a sending function. For example, the transceiver may be a transceiving circuit, or an interface, or an interface circuit. The transceiving circuit, the interface or the interface circuit which is configured to implement both the receiving function and the sending function may be arranged separately or integrated together. The transceiving circuit, the interface or the interface circuit may be configured to read and write codes/data, or may be configured to transmit or transfer a signal.

In one implementation, the processor may be configured to store a computer program therein, the computer program running on the processor to cause the communication apparatus to perform the methods described in the above method embodiments. The computer program may be solidified in the processor, in which case the processor may be implemented by hardware.

In one implementation, the communication apparatus may include a circuit that can implement a sending or receiving or communicating function in the above method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be fabricated using a variety of IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) or gallium arsenide (GaAs).

The communication apparatus described in the above embodiments may be a network device or a terminal device (e.g., the terminal device in the above method embodiments), but the scope of the communication apparatus described in the present disclosure is not limited thereto. The structure of the communication apparatus may not be restricted. The communication apparatus may be a stand-alone device or part of a larger device. For example, the communication apparatus may be:
(1) a stand-alone integrated circuit IC, or chip, a chip system or a subsystem;
(2) a set with one or more ICs, and optionally, the IC set may also include a storage part for storing data and computer programs;
(3) ASIC, such as a modem;
(4) a module that may be embedded in other devices;
(5) a receiver, a terminal device, an intelligent terminal device, a cellular phone, a wireless device, a handset, a mobile unit, a vehicular device, a network device, a cloud device, an artificial intelligence device, etc.; and
(6) Others.

In the case where the communication apparatus may be a chip or a chip system, the chip including a processor and an interface. The number of the processors may be one or more, and the number of interfaces may be multiple.

Optionally, the chip further includes a memory, the memory being configured to have stored necessary computer programs and data therein.

Those skilled in the art may also understand that various illustrative logical blocks and steps listed in the embodiments of the present disclosure may be implemented by electronic hardware, computer software, or a combination thereof. Such function being implemented in hardware or software depends on specific applications and design requirements of the entire system. Those skilled in the art may use various methods for each particular application to achieve the described functions, but such implementation should not be considered beyond the protection scope of the embodiments of the present application.

An embodiment of the present disclosure further provides a system for determining a duration of a side link. The system includes a communication device as a terminal device (e.g., a first terminal device in the above method embodiments) and a communication apparatus as a network device in the above embodiments; or the system includes a communication apparatus as a terminal device (e.g., the first terminal device in the above method embodiments) and a communication apparatus as a network device in the above embodiments.

The present invention further provides a readable storage medium configured to have stored instructions therein, the instructions, when executed by a computer, being configured to implement the functions in any of the above method embodiments.

The present disclosure further provides a computer program product configured to be executed by a computer to implement the functions in any of the above methods.

In the above embodiments, the functions may be entirely or partially implemented by software, hardware, firmware or any combination thereof. The functions may be entirely or partially implemented in the form of a computer program product while being implemented by software. The computer program product includes one or more computer programs. When the computer program is loaded and executed on a computer, a flow or function described in the embodiments of the present disclosure is generated entirely or partially. The computer may be a general-purpose computer, a special-purpose computer, a computer network, or other programmable apparatus. The computer program may be stored in a computer-readable storage medium, or transmitted from one computer-readable storage medium to another computer-readable storage medium. For example, the computer program may be transmitted from a website site, a computer, a server or a data center to another website site, computer, server or data center by means of a wired (e.g., a coaxial cable, an optical fiber, or a digital subscriber line (DSL)) or wireless (e.g., infrared, wireless, or microwave) form. The computer-readable storage medium may be any available medium that can be accessed by the computer or a data storage device such as a server or a data center, which is integrated with one or more available media. The available medium may be a magnetic medium (e.g., a floppy disk, a hard disk or a magnetic tape), an optical medium (e.g., a high-density digital video disc (DVD)), or a semiconductor medium (e.g., a solid state disk (SSD)).

A person of ordinary skill in the art may understand that "first", "second" and other numerical symbols involved in the present disclosure are distinguished only for the convenience of description, and are not used to limit the scope of the embodiments of the present disclosure, and also indicate a sequential order.

At least one of the present disclosures may also be described as one or more, and the plurality may be two, three, four, or more, without limitation in the present disclosure. In the embodiments of the present disclosure, for a technical feature, the technical features for this technical feature are distinguished by the terms "first", "second", "third", "A", "B", "C" and "D", etc., and the technical features described by "first", "second", "third", "A", "B", "C" and "D" are not in a chronological order or in a magnitude order.

Other embodiments of the present invention will be apparent to those skilled in the art from consideration of the specification and to practice the present invention herein. The present disclosure is intended to cover any variations, uses, or adaptations of the present invention, following the general principles thereof and including common knowledge or commonly used technical measures which are not disclosed herein. The specification and embodiments are to be considered as exemplary only, and the true scope and spirit of the present disclosure are indicated by the following claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for signal processing, performed by a user equipment (UE), comprising:
acquiring carrier frequency information of at least two carrier frequencies configured by a network device, wherein the carrier frequencies are used for transmission of a positioning signal;
acquiring positioning signal resources corresponding to the respective carrier frequencies configured by the network device; and
sending the positioning signal on the basis of the carrier frequency information of the at least two carrier frequencies and the positioning signal resources.

2. The method according to claim 1, wherein the carrier frequency information comprises at least one of:
an identity (ID) of each carrier frequency;
a carrier frequency combination ID corresponding to at least two carrier frequencies;
a starting frequency point position of each carrier frequency; or
an end frequency point position of each carrier frequency.

3. The method according to claim 1, wherein the positioning signal is configured to implement carrier phase-based positioning.

4. The method according to claim 1, wherein the acquiring the positioning signal resources corresponding to the respective carrier frequencies configured by the network device comprises:
acquiring parameter information of the positioning signal resources corresponding to the respective carrier frequencies configured by the network device, the parameter information comprising at least one of:
a positioning signal resource ID;
a positioning signal resource set ID;
a transmission cycle;
a slot offset;
a number of symbols occupied;
a comb-size;
a starting symbol position;
a sub-carrier spacing (SCS);
quasi-colocation (QCL) information;
a carrier frequency bandwidth;
a starting physical resource block (PRB) position;
a P0 value and an alpha value corresponding to a power control parameter; or
a pathlossReferenceRS.

5. The method according to claim 4, wherein acquiring the parameter information of the positioning signal resources corresponding to the respective carrier frequencies configured by the network device comprises:
acquiring parameter information of positioning signal resources independently configured by the network device for each carrier frequency, the parameter information of the positioning signal resources independently configured by the core network device for each carrier frequency being the same or different.

6. The method according to claim 4, wherein acquiring the parameter information of the positioning signal resources corresponding to the respective carrier frequencies configured by the network device comprises:
acquiring a first part of parameter information configured by the network device, first parts of parameter information corresponding to the at least two carrier frequencies being the same; and
acquiring a second part of parameter information independently configured by the network device for each carrier frequency, second parts of the parameter information corresponding to the at least two carrier frequencies being the same or different.

7. The method according to claim 5 or 6, further comprising:
reporting capability information, the capability information being configured to indicate whether the UE supports simultaneous transmission of the positioning signal on a plurality of carrier frequencies.

8. The method according to claim 1, further comprising:
reporting information;
wherein the information comprises at least one of:
phase error group information when the UE sends the positioning signal, the phase error group information comprising an ID of a phase error group and/or an error value corresponding to the phase error group; or
timing error group information when the UE sends the positioning signal, the timing error group information comprising an ID of a timing error group and/or an error value corresponding to the timing error group.

9. The method according to claim 1, further comprising:
determining whether the positioning signal on the at least two carrier frequencies fails, and whether to stop sending the positioning signal based on the determination result.

10. The method according to claim 9, wherein determining whether the positioning signal on the at least two carrier frequencies fails, and whether to stop sending the positioning signal based on the determination result comprises:
determining separately whether the positioning signal on the respective carrier frequencies fails; and
stopping sending the positioning signal on a carrier frequency on which the positioning signal fails.

11. The method according to claim 9, wherein determining whether the positioning signal on the at least two carrier frequencies fails, and whether to stop sending the positioning signal based on the determination result comprises:
in a case that the positioning signal on any of the carrier frequencies fails, stopping sending the positioning signal on both the carrier frequency and another related carrier frequency.

12. The method according to any one of claims 9 to 11, wherein determining whether the positioning signal on the at least two carrier frequencies fails comprises:
determining whether the UE is able to measure RS and/or pathlossReferenceRS indicated by QCL information of the positioning signal on the carrier frequencies; and
determining that the positioning signal on the carrier frequencies fails in response to the UE being unable to measure the RS and/or the pathlossReferenceRS indicated by the QCL information of the positioning signal on the carrier frequencies.

13. A method for signal processing, performed by an access network device, comprising:
receiving a positioning signal on positioning signal resources on at least two carrier frequencies; and
measuring the positioning signal to obtain a positioning report, and sending the positioning report to a core network device.

14. The method according to claim 13, wherein the positioning signal is configured to implement carrier phase-based positioning.

15. The method according to claim 13, further comprising:
acquiring capability information reported by a UE, the capability information being configured to indicate whether the UE supports simultaneous transmission of the positioning signal on a plurality of carrier frequencies.

16. The method according to claim 15, wherein receiving the positioning signal on the positioning signal resources of the at least two carrier frequencies comprises:
receiving the positioning signal simultaneously on the positioning signal resources on the at least two carrier frequencies; and/or
receiving the positioning signal non-simultaneously on the positioning signal resources on the at least two carrier frequencies.

17. The method according to claim 13, further comprising:
acquiring information reported by a UE;
wherein the information comprises at least one of:
phase error group information when the UE sends the positioning signal, the phase error group information comprising an ID of a phase error group and/or an error value corresponding to the phase error group; or
timing error group information when the UE sends the positioning signal, the timing error group information comprising an ID of a timing error group and/or an error value corresponding to the timing error group.

18. The method according to claim 13, wherein the positioning report comprises at least one of:
an integer number of complete phase cycles;
a fractional part of phase less than a complete cycle;
phase error group information when the access network device receives the positioning signal, the phase error group information comprising an ID of a phase error group and/or an error value corresponding to the phase error group;
reference signal receiving power (RSRP);
an angle of arrival (AoA);
an angle of departure (AoD);
a time of arrival (ToA);
a time difference of arrival (TDoA);
a round trip time (RTT);
an Rx time error group (RxTEG);
a Tx time error group (TxTEG); or
a Tx Rx time error group (TxRxTEG).

19. A method for signal processing, performed by a core network device, comprising:
configuring carrier frequency information of at least two carrier frequencies, wherein the carrier frequencies are used for transmission of a positioning signal; and
configuring positioning signal resources corresponding to the respective carrier frequencies.

20. The method according to claim 19, further comprising:
receiving a positioning report sent by an access network device.

21. The method according to claim 19, wherein the carrier frequency information comprises at least one of:
an identity (ID) of each carrier frequency;
a carrier frequency combination ID corresponding to at least two carrier frequencies;
a starting frequency point position of each carrier frequency; or
an end frequency point position of each carrier frequency.

22. The method according to claim 19, wherein the positioning signal is configured to implement carrier phase-based positioning.

23. The method according to claim 19, wherein configuring the positioning signal resources corresponding to the respective carrier frequencies comprises:
configuring parameter information of the positioning signal resources corresponding to the respective carrier frequencies, the parameter information comprising at least one of:
a positioning signal resource ID;
a positioning signal resource set ID;
a transmission cycle;
a slot offset;
a number of symbols occupied;
a comb-size;
a starting symbol position;
a sub-carrier spacing (SCS);
quasi-colocation (QCL) information;
a carrier frequency bandwidth;
a starting physical resource block (PRB) position;
a P0 value and an alpha value corresponding to a power control parameter; or
a pathlossReferenceRS.

24. The method according to claim 23, wherein configuring the positioning signal resources corresponding to the respective carrier frequencies comprises:
configuring parameter information of positioning signal resources independently for each carrier frequency, the parameter information of the positioning signal resources corresponding to each carrier frequency being the same or different.

25. The method according to claim 23, wherein configuring the positioning signal resources corresponding to the respective carrier frequencies comprises:
configuring a first part of parameter information, first parts of parameter information corresponding to the at least two carrier frequencies being the same; and
configuring a second part of parameter information independently for each carrier frequency, second parts of parameter information corresponding to the at least two carrier frequencies being the same or different.

26. The method according to claim 19 or 20, further comprising:
acquiring capability information reported by a UE, the capability information being configured to indicate whether the UE supports simultaneous transmission of the positioning signal on a plurality of carrier frequencies.

27. The method according to claim 26, wherein configuring the positioning signal resources corresponding to the respective carrier frequencies comprises:
configuring positioning signal resources of the same time domain and/or different time domains for the respective carrier frequencies, in response to the capability information indicating that the UE supports the simultaneous transmission of the positioning signal on the plurality of carrier frequencies; and
configuring positioning signal resources of different time domains for the respective carrier frequencies, in response to the capability information indicating that the UE does not support the simultaneous transmission of the positioning signal on the plurality of carrier frequencies.

28. The method according to claim 19 or 20, further comprising:
acquiring information reported by the UE;
wherein the information comprises at least one of:
phase error group information when the UE sends the positioning signal, the phase error group information comprising an ID of a phase error group and/or an error value corresponding to the phase error group; or
timing error group information when the UE sends the positioning signal, the timing error group information comprising an ID of a timing error group and/or an error value corresponding to the timing error group.

29. The method according to claim 20, wherein the positioning report comprises at least one of: an integer number of complete phase cycles;
a fractional part of phase less than a complete cycle;
phase error group information when the access network device receives the positioning signal, the phase error group information comprising an ID of a phase error group and/or an error value corresponding to the phase error group;
reference signal receiving power (RSRP);
an angle of arrival (AoA);
an angle of departure (AoD);
a time of arrival (ToA);
a time difference of arrival (TDoA);
a round trip time (RTT);
an Rx time error group (RxTEG);
a Tx time error group (TxTEG); or
a Tx Rx time error group (TxRxTEG).

30. An apparatus for signal processing, configured on a LTE, comprising:
a first acquiring module, configured to acquire carrier frequency information of at least two carrier frequencies configured by a network device, wherein the carrier frequencies are used for transmission of a positioning signal;
a second acquiring module, configured to acquire positioning signal resources corresponding to the respective carrier frequencies configured by the network device; and
a sending module, configured to send the positioning signal on the basis of the carrier frequency information of the at least two carrier frequencies and the positioning signal resources.

31. An apparatus for signal processing, configured on an access network device, comprising:
a receiving module, configured to receive a positioning signal on positioning signal resources on at least two carrier frequencies; and
a processing module, configured to measure the positioning signal to obtain a positioning report, and send the positioning report to a core network device.

32. An apparatus for signal processing, configured on a core network device side, comprising
a first configuring module, configured to configure carrier frequency information of at least two carrier frequencies, wherein the carrier frequencies are used for the transmission of a positioning signal; and
a second configuring module, configured to configure positioning signal resources corresponding to the respective carrier frequencies.

33. A communication apparatus, comprising a processor and a memory, wherein the memory is configured to store a computer program therein, and the processor is configured to execute the computer program stored in the memory, such that the apparatus performs the method according to any one of claims 1 to 13.

34. A communication apparatus, comprising a processor and a memory, wherein the memory is configured to store a computer program therein, and the processor is configured to execute the computer program stored in the memory, such that the apparatus performs the method according to any one of claims 14 to 19.

35. A communication apparatus, comprising a processor and a memory, wherein the memory is configured to store a computer program therein, and the processor is configured to execute the computer program stored in the memory, such that the apparatus performs the method according to any one of claims 20 to 30.

36. A communication apparatus, comprising a processor and an interface circuit, wherein
the interface circuit is configured to receive a code instruction and transmit the code instruction to the processor; and
the processor is configured to run the code instruction to perform the method according to any one of claims 1 to 13.

37. A communication apparatus, comprising a processor and an interface circuit, wherein
the interface circuit is configured to receive a code instruction and transmit the code instruction to the processor; and
the processor is configured to run the code instruction to perform the method according to any one of claims 14 to 19.

38. A communication apparatus, comprising a processor and an interface circuit, wherein
the interface circuit is configured to receive a code instruction and transmit the code instruction to the processor; and
the processor is configured to run the code instruction to perform the method according to any one of claims 20 to 30.

39. A computer-readable storage medium having stored instructions that, when being executed, cause the method according to any one of claims 1 to 13 to be implemented.

40. A computer-readable storage medium having stored instructions that, when being executed, cause the method according to any one of claims 14 to 19 to be implemented.

41. A computer-readable storage medium having stored instructions that, when being executed, cause the method according to any one of claims 20 to 30 to be implemented.
